# EUROPEAN PATENT SPECIFICATION

(11) **EP 3 923 181 B1**
(45) Date of publication and mention of the grant of the patent: **23.09.2026**
(21) Application number: 20179761.0
(22) Date of filing: 12.06.2020
(51) Int. Cl.: G06V 20/58

(54) **A VISION SYSTEM AND METHOD FOR A MOTOR VEHICLE**
SICHTSYSTEM UND -VERFAHREN FÜR EIN KRAFTFAHRZEUG
SYSTÈME DE VISION ET PROCÉDÉ POUR VÉHICULE À MOTEUR

(43) Date of publication of application: 15.12.2021
(73) Proprietor: Qualcomm Auto Ltd., Cambridge CB4 0WZ (GB)
(72) Inventor: Cronvall, Per, 58332 Linköping (SE); Jagbrant, Gustav, 58646 Linköping (SE)
(74) Representative: Reddie & Grose LLP

(56) References cited:
- US-A1- 2014 327 772
- US-A1- 2017 270 377
- US-A1- 2018 225 530
- CHEN LINGYING ET AL: "Real-Time Traffic Sign Classification Using Combined Convolutional Neural Networks", 2017 4TH IAPR ASIAN CONFERENCE ON PATTERN RECOGNITION (ACPR), IEEE, 26 November 2017 (2017-11-26), pages 399 - 404, XP033475288, [retrieved on 20181213], DOI: 10.1109/ACPR.2017.12
- SESMERO M P ET AL: "Specialized Ensemble of Classifiers for Traffic Sign Recognition", 20 June 2007, COMPUTATIONAL AND AMBIENT INTELLIGENCE; [LECTURE NOTES IN COMPUTER SCIENCE], SPRINGER BERLIN HEIDELBERG, BERLIN, HEIDELBERG, PAGE(S) 733 - 740, ISBN: 978-3-540-73006-4, XP019080643
- NATARAJAN SUDHA ET AL: "Traffic sign recognition using weighted multi-convolutional neural network", IET INTELLIGENT TRANSPORT SYSTEMS, THE INSTITUTION OF ENGINEERING AND TECHNOLOGY, MICHAEL FARADAY HOUSE, SIX HILLS WAY, STEVENAGE, HERTS. SG1 2AY, UK, vol. 12, no. 10, 1 December 2018 (2018-12-01), pages 1396 - 1405, XP006081592, ISSN: 1751-956X, DOI: 10.1049/IET-ITS.2018.5171

## Description

The invention relates to a vision system for a motor vehicle, comprising an imaging apparatus adapted to capture images from a surrounding of the motor vehicle, and a data processing unit adapted to perform image processing on images captured by said imaging apparatus, wherein said data processing unit comprises a traffic sign detector adapted to detect traffic signs in images captured by said imaging apparatus through image processing and a decision section. The invention relates also to a corresponding vision method.

Traffic sign recognition is a key component in most modern vehicles. The signs are typically detected and classified using machine learning techniques such as deep neural networks. The performance under normal conditions is generally very good; however, when a rare misclassification occurs it may have severe implications. It is possible to complement the image based information with map data; however, this is not always available or the quality may be too low. As such, current autonomous and semi-autonomous driving vehicles may not be sufficiently safe outside well-mapped areas.

In addition, reliability factors such as weather (raining, snowing, etc.), time of day (day/night), etc. may be used to determine the reliability of the current classifications, see US 8,918,277 B2. Using a reliability factor however only gives an estimate of the current image-based classification performance in general; it does not address the main problem of individual signs with an altered appearance.

CHEN LINGYING ET AL: "Real-Time Traffic Sign Classification Using Combined Convolutional Neural Networks", 2017 4TH IAPR ASIAN CONFERENCE ON PATTERN RECOGNITION (ACPR), IEEE, 26 November 2017 (2017-11-26), pages 399-404, DOI: 10.1109/ACPR.2017.12 discloses a traffic signal recognition method that divides traffic signs into hierarchal structure according to the types of features, and then use a combined CNNs (CCNN) to adapt the hierarchical traffic signs, where the probabilities of superclass and subclass the sign belongs to are calculated using two CNNs with a simple network. Finally, classifying of the sign can be achieved by the weighted output of the two CNNs, and a low complexity sign recognition system could be obtained

SESMERO M P ET AL: "Specialized Ensemble of Classifiers for Traffic Sign Recognition", 20 June 2007 (2007-06-20), COMPUTATIONAL AND AMBIENT INTELLIGENCE; [LECTURE NOTES IN COMPUTER SCIENCE], SPRINGER BERLIN HEIDELBERG, BERLIN, HEIDELBERG, PAGE(S) 733 - 740, ISBN: 978-3-540-73006-4 discloses an implementation of a system whose main task is to classify prohibition road signs into several categories, once the traffic sign has been detected. In order to improve the classification performance, the system is composed by an ensemble of specialized classifiers. Each classifier is associated with a particular kind of road sign and its goal is to distinguish this sign from the others.

NATARAJAN SUDHA ET AL: "Traffic sign recognition using weighted multi-convolutional neural network", IET INTELLIGENT TRANSPORT SYSTEMS, THE INSTITUTION OF ENGINEERING AND TECHNOLOGY, MICHAEL FARADAY HOUSE, SIX HILLS WAY, STEVENAGE, HERTS. SG1 2AY, UK, vol. 12, no. 10, 1 December 2018 (2018-12-01), pages 1396-1405, ISSN: 1751-956X, DOI: 10.1049/IET-ITS.2018.5171 discloses a reliable and robust convolutional neural network (CNN) for classifying these signs.

Of special concern for autonomous vehicles is a situation where the driver is not paying attention to the surroundings, and the misclassification of a sign can lead to potentially dangerous situations. For example, a 30 km/h speed sign obstructed by dirt, being misclassified as an 80 km/h speed sign, could cause the vehicle to accelerate far beyond the speed limit.

Additional risks arise from vandalism and criminal behavior such as placing real signs in inappropriate places or modifying existing signs to cause them to be misclassified in a dangerous way. A special case of this is the possible use of adversarial attacks on machine learning based classifiers.

The problem underlying the present invention is to provide a vision system having a reliable traffic sign recognition suited for autonomous motor vehicles and self-driving cars.

The invention solves this problem with the features of the independent claims with preferred feature set out in the dependent claims.

Typically, human drivers are not susceptible to altered signs due to their ability to use common sense to validate the plausibility of a sign based on its surrounding. As such it is unlikely for a human driver to misinterpret for example a dirty 30 km/h sign in an urban environment as an 80 km/h sign. This human common sense is based on the combination of surrounding features such as the road type, road curvature, existence of sidewalks, buildings, etc. This common sense is what the invention attempts to replicate technically for an automatic vision system.

Preferably, the traffic sign estimator estimates the traffic sign validity information based on at least one entire image from the imaging apparatus, i.e. holistically. In this preferred embodiment, the traffic sign estimator may be denoted as holistic traffic sign estimator.

The invention is applicable to autonomous driving, where the ego vehicle is an autonomous vehicle adapted to drive partly or fully autonomously or automatically, and driving actions of the driver are partially and/or completely replaced or executed by the ego vehicle.

In a preferred embodiment, under a plurality of probable speed signs estimated by the traffic sign estimator, the speed sign with the lowest speed is considered the appropriate/most appropriate by the data processing unit, and thus chosen to be the true speed sign for further processing. In other words, further processing in the data processing unit is preferably based on choosing the detected traffic sign to have said lowest probable speed, i.e. the lowest speed exceeding a predefined probability threshold. Preferably, the decision section sends out a control signal to control the motor vehicle to perform a suitable action in conformity with said traffic sign considered appropriate/most appropriate. For example, the control signal may control the braking system of the motor vehicle to brake and thus to decelerate the motor vehicle until the speed of the appropriate/most appropriate speed sign has been reached.

The invention may be deployed to estimate validity information, like the probability, or holistic probability, of any type of traffic sign, for example stop signs, yield signs, priority signs, etc.

Preferably, the data processing unit comprises a road marking estimator adapted to estimate validity information, like the probability, of one or more road markings, and to compare the road marking validity information with corresponding road marking detections detected and classified by a road marking detector/classifier. The invention may thus be deployed to estimate validity information of road markings, for example e.g. turn left, turn right, bus-lane, speed etc., and to compare the (holistic) validity information with classified road marking detections in an analogous way as for traffic signs.

The invention may be deployed in a motor vehicle where the driver can take over from the autonomous driving system. In this scenario, the decision section may send out a control signal to turn off an autonomous driving system and to return control to the driver if it finds an inconsistency between a classified detected traffic sign and the estimation by the traffic sign estimator.

Preferably, the traffic sign estimator is a classifier, and more preferably a trained classifier. Any kind of machine learning based classifier may be utilized for the traffic sign estimator, such as a Neural Network of any kind, like Convolutional Neural Network or Recurrent Neural Network, Support Vector Machines, Boosting classifier, Bag-Of-Words classifier.

According to an aspect of the invention, training the traffic sign estimator is performed on training images that do not include information on the traffic sign of interest, i.e., a currently valid traffic sign. For example, if an image has been taken on a road where a speed sign limits the speed to 80 km/h, the training image shall not contain this information. Generally, a traffic sign estimator, in particular a neural network, is trained to predict, preferably based on an entire image, the most recent traffic sign that has been passed and is thus valid for the respective image.

In the case of speed signs, or more generally traffic signs of a specific type, it is suitable to select images from a point where the sign has been passed by the ego vehicle and is no longer visible to the imaging system, until right before the next speed sign, or traffic sign of the same specific type, comes into sight. For such training images, a traffic sign estimator, in particular a neural network, is trained to predict, preferably based on an entire image, the most recent speed sign, or traffic sign of the specific type, that has been passed.

An alternative approach to train the (holistic) traffic sign estimator is to use images where the traffic signs of interest remain visible, but all signs are masked, blurred or replaced with random signs, in order to avoid having the (holistic) classifier learning to detect actual signs, and instead force it to classify the actual surroundings.

In the following the invention shall be illustrated on the basis of preferred embodiments with reference to the accompanying drawings, wherein:
- Fig. 1: shows a schematic drawing of a vision system; and
- Fig. 2: shows a diagram illustrating functional elements in the data processing unit of the vision system.

The vision system 10 is preferably an on-board vision system 10 which is mounted, or to be mounted, in or to a motor vehicle. The vision system 10 comprises an imaging apparatus 11 for capturing images of a region surrounding the motor vehicle, for example a region in front of the motor vehicle. The imaging apparatus 11, or parts thereof, may be mounted for example behind the vehicle windscreen or windshield, in a vehicle headlight, and/or in the radiator grille. Preferably the imaging apparatus 11 comprises one or more optical imaging devices 12, in particular cameras, preferably operating in the visible wavelength range, or in the infrared wavelength range, or in both visible and infrared wavelength range. In some embodiments the imaging apparatus 11 comprises a plurality of imaging devices 12 in particular forming a stereo imaging apparatus 11. In other embodiments only one imaging device 12 forming a mono imaging apparatus 11 can be used. Each imaging devices 12 preferably is a fixed-focus camera, where the focal length f of the lens objective is constant and cannot be varied.

The imaging apparatus 11 is coupled to a data processing unit 14 (or electronic control unit, ECU) which is preferably an on-board data processing unit 14. The data processing unit 14 is adapted to process the image data received from the imaging apparatus 11. The data processing unit 14 is preferably a digital device which is programmed or programmable and preferably comprises a microprocessor, a microcontroller, a digital signal processor (DSP), and/or a microprocessor part in a System-On-Chip (SoC) device, and preferably has access to, or comprises, a digital data memory 25. The data processing unit 14 may comprise a dedicated hardware device, like a Field Programmable Gate Array (FPGA), an Application Specific Integrated Circuit (ASIC), a Graphics Processing Unit (GPU) or an FPGA and/or ASIC and/or GPU part in a System-On-Chip (SoC) device, for performing certain functions, for example controlling the capture of images by the imaging apparatus 11, receiving the signal containing the image information from the imaging apparatus 11, rectifying or warping pairs of left/right images into alignment and/or creating disparity or depth images. The data processing unit 14 may be connected to the imaging apparatus 11 via a separate cable or a vehicle data bus. In another embodiment the ECU and one or more of the imaging devices 12 can be integrated into a single unit, where a one box solution including the ECU and all imaging devices 12 can be preferred. All steps from imaging, image processing to possible activation or control of a safety device 18 are performed automatically and continuously during driving in real time.

In another embodiment, the above described image processing, or parts thereof, are performed in the cloud. Consequently, the data processing unit 14, or parts thereof, may be realized by cloud processing resources.

Image and data processing carried out in the data processing unit 14 advantageously comprises identifying and preferably also classifying possible objects (object candidates) in front of the motor vehicle, such as pedestrians, other vehicles, bicyclists and/or large animals, tracking over time the position of objects or object candidates identified in the captured images, and activating or controlling at least one safety device 18 depending on an estimation performed with respect to a tracked object, for example on an estimated collision probability.

The safety device 18 may comprise at least one active safety device and/or at least one passive safety device. In particular, the safety device 18 may comprise one or more of: at least one safety belt tensioner, at least one passenger airbag, one or more restraint systems such as occupant airbags, a hood lifter, an electronic stability system, at least one dynamic vehicle control system, such as a brake control system and/or a steering control system, a speed control system; a display device to display information relating to a detected object; a warning device adapted to provide a warning to a driver by suitable optical, acoustical and/or haptic warning signals.

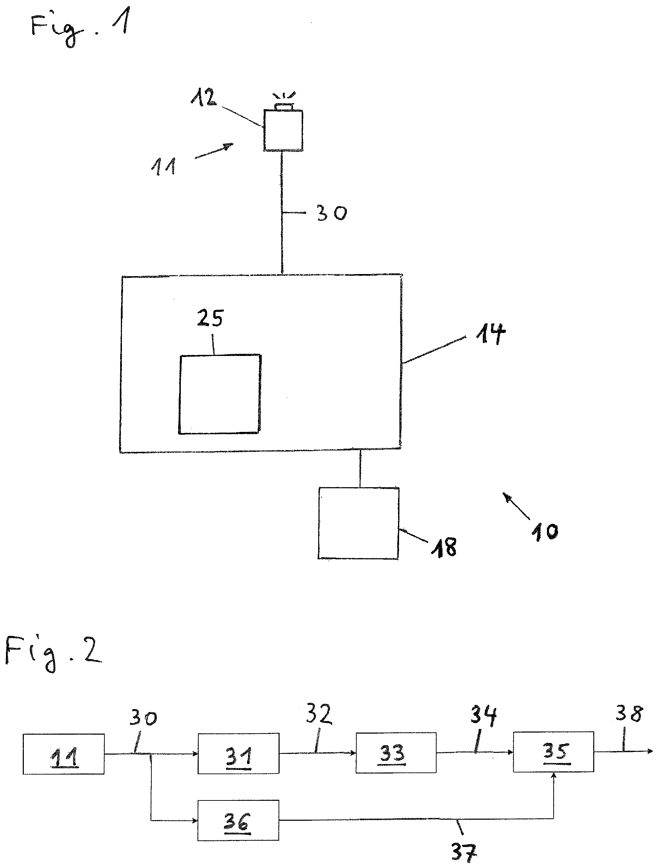

In the following, a process of traffic sign verification under the present invention is explained with reference to Figure 2. All method steps related to the functional units 31-38 are performed in real time during driving in the data processing unit 14.

Images 30 captured by the imaging apparatus 11 of a motor vehicle are forwarded to a traffic sign detector/classifier 31, 33, which is known per se, and in parallel also to an inventive holistic traffic sign estimator 36.

The traffic sign detector 31 is adapted to detect traffic signs in the input images. Traffic signs 32 detected by the traffic sign detector 31 are forwarded to a traffic sign classifier 33 adapted to classify a detected traffic sign into one or more of a predefined number of categories. The traffic sign classifier 33 is known per se, and usually performs classification on a small image patch in a so-called bounding box closely around a detected traffic sign. Classified traffic signs 34 are forwarded to a decision section 35. The traffic sign detector 31 and/or classifier 33 may perform tracking a detected traffic sign over a plurality of image frames. The traffic sign detector 31 and the traffic sign classifier 33 may be a single unit adapted to detect and classify traffic signs simultaneously.

The holistic traffic sign estimator 36 has been trained in advance, and is adapted to output, for each entire image from the imaging apparatus 11, validity information 37 of one or more traffic signs in the input image 30, for example a probability 37 that one or more specific, i.e. predefined, traffic signs is present in the input image 30. More specifically, the holistic traffic sign estimator 36 can estimate and output validity information 37, like a probability or a validity/invalidity flag value, for each of a plurality of predefined traffic signs to be present in the input image 30. The one or more estimated validity values or probabilities 37 are forwarded to the decision section 35. The decision section 35 compares or combines the validity information 37 provided by the traffic sign estimator 36 with information 34 provided by the traffic sign detector 31 and/or traffic sign classifier 33, and initiates a suitable action.

In the following, a practical example is discussed where the holistic traffic sign estimator 36 is restricted to estimating speed signs, and therefore is a holistic speed sign estimator 36. Specifically, the holistic speed sign estimator 36 is a trained classifier, and may be adapted to classify an entire input image into one or more of, for example, five categories: containing a 30 km/h speed sign, containing a 50 km/h speed sign, containing a 60 km/h speed sign, containing an 80 km/h speed sign, containing none of these speed signs. It goes without saying that the number of speed signs can be different from five, and/or the speed signs which can be estimated from by the holistic speed sign estimator 36 can involve other speed signs than the above mentioned.

It may be assumed that the traffic sign detector/classifier 31/33 detects and identifies an 80 km/h speed sign in a particular input image 30. The holistic speed sign estimator 36 estimates the following probabilities for the input image:
5% for 30 km/h speed sign, 15% for 50 km/h speed sign, 40% for 60 km/h speed sign, 30% for 80% speed sign, and 10% for none of these speed signs.

The decision section 35 compares or combines the above probabilities 37 with the finding by the speed sign detector/classifier 31, 33, and can initiate one or more of the following actions based on this comparison.
(i) The decision section 35 may accept the detected traffic sign in the further processing, either as an 80 km/h traffic sign as classified by the speed sign detector/classifier 31, 33, or as a 60 km/h speed sign as estimated (with highest probability) by the holistic speed estimator 36.
(ii) The decision section 35 may ignore the detected traffic sign in the further processing.
(iii) The decision section 35 may output a control signal 38 to a signaling device 18 (see Figure 1) to suggest an alternative action to the driver, like taking care of speed limits.
(iv) The decision section 35 may output a control signal 38 to the signaling device 18 to signal to the driver to take over control of the vehicle.
(v) The decision section 35, determining an inconsistency between the speed sign (80 km/h) detected and classified by the speed sign detector/classifier 31, 33 and the speed sign (60 km/h) having the highest probability according to the holistic speed sign estimator 36, may determine which of the sign interpretations offered by the traffic sign detector/classifier 31, 33 and the traffic sign estimator 36 is the appropriate/most appropriate . In one embodiment, the speed sign (60 km/h) having the highest probability according to the holistic speed sign estimator 36 may be considered appropriate/most appropriate. In a preferred embodiment, the speed sign (50 km/h) with the lowest speed and a probability over a predetermined threshold (for example 10%) is considered appropriate/most appropriate, here disregarding the 30 km/h speed sign the probability of which is too low to be considered true. The decision section initiates a suitable action based on the appropriate/most appropriate speed sign, for example braking the motor vehicle to decelerate it to the speed of the appropriate/most appropriate speed sign.

As is evident from the above, the data processing unit 14 preferably comprises two different classifiers, namely the conventional traffic sign classifier 33 performing classification only on a small image patch around a detected traffic sign, and the inventive holistic traffic sign estimator 36 which advantageously performs classification on an entire input image.

## Claims

1. A vision system for a motor vehicle, comprising an imaging apparatus (11) adapted to capture images (30) from a surrounding of the motor vehicle, and a data processing unit (14) adapted to perform image processing on images (30) captured by said imaging apparatus (11), wherein said data processing unit (14) comprises a traffic sign detector (31) adapted to detect traffic signs in images (30) captured by said imaging apparatus (11) through image processing, a traffic sign classifier (33) arranged to perform classification on an image patch around the detected traffic sign and a decision section (35), **characterized in that** said data processing unit (14) further comprises a traffic sign estimator (36) that is a trained classifier trained to predict based on an entire image the most recent traffic sign that has been passed using training images that do not include information on a traffic sign and that is adapted to estimate validity information (37) of one or more traffic signs in an image (30) captured by said imaging apparatus (11) based on one or more entire images from said imaging apparatus and is further adapted to output said estimated traffic sign validity information (37) to a decision section (35) of said data processing unit (14), wherein the validity information comprises a probability of one or more specific traffic signs being present in the image, and wherein said decision section (35) combines the information provided by the traffic sign estimator (36) with information provided by the traffic sign detector (31) and traffic sign classifier (33) and, when the decision section determines a discrepancy between the detected sign and the estimation by the traffic sign estimator, the decision section determines which of the sign interpretations offered by the traffic sign detector and the traffic sign estimator is appropriate and outputs a control signal to perform an action in conformity with the traffic sign considered appropriate.

2. The vision system as claimed in claim 1, wherein based on said comparison or combination, the decision section (35) initiates a suitable action comprising one or more of
- outputting a control signal (38) to a signaling device (18) to suggest an alternative action to the driver;
- outputting a control signal (38) to a signaling device (18) to signal to the driver to take over control of the vehicle.

3. The vision system as claimed in claim 2, wherein under a plurality of probable speed signs estimated by the traffic sign estimator (36), the speed sign with the lowest speed is considered appropriate.

4. The vision system as claimed in 2 or 3, wherein the decision section (35) sends out a control signal (38) to control the motor vehicle to perform a suitable action in conformity with said traffic sign considered appropriate.

5. The vision system as claimed in any one of the preceding claims, wherein said data processing unit (14) comprises a road marking estimator adapted to estimate validity information of one or more road markings, and to compare the road marking validity information with corresponding road marking detections detected and classified by a road marking detector/classifier.

6. The vision system as claimed in any one of the preceding claims, wherein the decision section (35) sends out a control signal to turn off an autonomous driving system and to return control to the driver if it finds an inconsistency between a classified detected traffic sign and the estimation by the traffic sign estimator (36).

7. The vision system as claimed in claim 1, wherein training the traffic sign estimator (36) is performed on images from a point where a traffic sign of a specific type has been passed by the ego vehicle and is no longer visible to the imaging system, until before the next speed sign of the same specific type comes into the field-of-view of the imaging system.

8. The vision system as claimed in claim 1, wherein the traffic sign estimator (36) is trained on images where information on traffic signs visible to the imaging apparatus (11) is masked, blurred or replaced with random signs.

## Patentansprüche

1. Sichtsystem für ein Kraftfahrzeug, das eine zum Aufnehmen von Bildern (30) aus einer Umgebung des Kraftfahrzeugs ausgelegte Bildgebungsvorrichtung (11) und eine zum Durchführen von Bildverarbeitung an von der genannten Bildgebungsvorrichtung (11) aufgenommenen Bildern (30) ausgelegte Datenverarbeitungseinheit (14) umfasst, wobei die genannte Datenverarbeitungseinheit (14) einen zum Erkennen von Verkehrszeichen in von der genannten Bildgebungsvorrichtung (11) aufgenommenen Bildern (30) durch Bildverarbeitung ausgelegten Verkehrszeichendetektor (31), einen zum Durchführen einer Klassifizierung eines Bildausschnitts um das erkannte Verkehrszeichen herum ausgelegten Verkehrszeichenklassifikator (33) und einen Entscheidungsteil (35) umfasst, **dadurch gekennzeichnet, dass** die genannte Datenverarbeitungseinheit (14) ferner einen Verkehrszeichenschätzer (36) umfasst, der ein zum Vorhersagen des zuletzt passierten Verkehrszeichens auf der Basis eines gesamten Bildes trainierter Klassifikator ist, anhand von Trainingsbildern, die keine Informationen über ein Verkehrszeichen enthalten, und der zum Schätzen von Gültigkeitsinformationen (37) über ein oder mehrere Verkehrszeichen in einem von der Bildgebungsvorrichtung (11) aufgenommenen Bild (30) auf der Basis von einem oder mehreren vollständigen Bildern von der genannten Bildgebungsvorrichtung ausgelegt ist und ferner zum Ausgeben der genannten geschätzten Verkehrszeichen-Gültigkeitsinformationen (37) an einen Entscheidungsteil (35) der genannten Datenverarbeitungseinheit (14) ausgelegt ist, wobei die Gültigkeitsinformationen eine Wahrscheinlichkeit umfassen, dass ein oder mehrere spezifische Verkehrszeichen in dem Bild vorhanden sind, und wobei der genannte Entscheidungsteil (35) die vom Verkehrszeichenschätzer (36) erhaltenen Informationen mit vom Verkehrszeichendetektor (31) und vom Verkehrszeichenklassifikator (33) erhaltenen Informationen kombiniert und, wenn der Entscheidungsteil eine Diskrepanz zwischen dem erkannten Zeichen und der Schätzung durch den Verkehrszeichenschätzer feststellt, bestimmt, welche der vom Verkehrszeichendetektor und vom Verkehrszeichenschätzer angebotenen Verkehrszeicheninterpretationen angemessen ist, und ein Steuersignal zum Durchführen einer Maßnahme gemäß dem als angemessen erachteten Verkehrszeichen ausgibt.

2. Sichtsystem nach Anspruch 1, wobei der Entscheidungsteil (35) auf der Basis des/der genannten Vergleichs oder Kombination eine geeignete Maßnahme einleitet, die eines oder mehrere umfasst von:
- Ausgeben eines Steuersignals (38) an ein Signalgabegerät (18), um dem Fahrer eine alternative Maßnahme vorzuschlagen;
- Ausgeben eines Steuersignals (38) an ein Signalgabegerät (18), um dem Fahrer zu signalisieren, die Kontrolle über das Fahrzeug zu übernehmen.

3. Sichtsystem nach Anspruch 2, wobei unter mehreren vom Verkehrszeichenschätzer (36) geschätzten wahrscheinlichen Geschwindigkeitsschildern das Geschwindigkeitsschild mit der niedrigsten Geschwindigkeit als angemessen angesehen wird.

4. Sichtsystem nach Anspruch 2 oder 3, wobei der Entscheidungsteil (35) ein Steuersignal (38) zum Steuern des Kraftfahrzeugs zum Ausführen einer geeigneten Maßnahme gemäß dem genannten als angemessen erachteten Verkehrszeichen aussendet.

5. Sichtsystem nach einem der vorherigen Ansprüche, wobei die genannte Datenverarbeitungseinheit (14) einen Straßenmarkierungsschätzer umfasst, der zum Schätzen von Gültigkeitsinformationen über eine oder mehrere Straßenmarkierungen und zum Vergleichen der Straßenmarkierungs-Gültigkeitsinformationen mit entsprechenden von einem Straßenmarkierungsdetektor/- klassifikator erkannten und klassifizierten Straßenmarkierungserkennungen ausgelegt ist.

6. Sichtsystem nach einem der vorherigen Ansprüche, wobei der Entscheidungsteil (35) ein Steuersignal zum Ausschalten eines autonomen Fahrsystems und zum Zurückgeben der Kontrolle an den Fahrer aussendet, wenn er eine Unstimmigkeit zwischen einem klassifizierten, erkannten Verkehrszeichen und der Schätzung durch den Verkehrszeichenschätzer (36) feststellt.

7. Sichtsystem nach Anspruch 1, wobei das Trainieren des Verkehrszeichenschätzers (36) anhand von Bildern ab einem Punkt, an dem ein Verkehrszeichen eines bestimmten Typs vom Ego-Fahrzeug passiert wurde und für das Bildgebungssystem nicht mehr sichtbar ist, bis zu dem Punkt erfolgt, bevor das nächste Geschwindigkeitsschild desselben spezifischen Typs in das Sichtfeld des Bildgebungssystems gelangt.

8. Sichtsystem nach Anspruch 1, wobei der Verkehrszeichenschätzer (36) an Bildern trainiert wird, bei denen Informationen zu für die Bildgebungsvorrichtung (11) sichtbaren Verkehrszeichen maskiert, unscharf gemacht oder durch zufällige Zeichen ersetzt sind.

## Revendications

1. Système de vision pour véhicule à moteur, comprenant un appareil d'imagerie (11) conçu pour capturer des images (30) d'un environnement du véhicule, et une unité de traitement de données (14) conçue pour réaliser un traitement d'images sur des images (30) capturées par ledit appareil d'imagerie (11), dans lequel ladite unité de traitement de données (14) comprend un détecteur de panneaux de signalisation (31) conçu pour détecter des panneaux de signalisation dans des images (30) capturées par ledit appareil d'imagerie (11) par le biais du traitement d'image, un classificateur de panneaux de signalisation (33) conçu pour réaliser une classification sur une vignette d'image autour du panneau de signalisation détecté et une section de décision (35),
**caractérisé en ce que** ladite unité de traitement des données (14) comprend en outre un estimateur de panneaux de signalisation (36) qui est un classificateur entraîné qui a été entraîné pour prédire sur la base d'une image entière le panneau de signalisation le plus récent qui a été franchi à l'aide d'images d'entraînement qui ne comportent pas d'informations sur un panneau de signalisation et qui est conçu pour estimer des informations de validité (37) d'un ou plusieurs panneaux de signalisation dans une image (30) capturée par ledit appareil d'imagerie (11) sur la base d'une ou plusieurs images entières provenant dudit appareil d'imagerie et qui est conçu en outre pour délivrer lesdites informations de validité de panneaux de signalisation (37) à une section de décision (35) de ladite unité de traitement de données (14), dans lequel les informations de validité comprennent une probabilité de présence d'un ou plusieurs panneaux de signalisation spécifiques dans l'image, et dans lequel ladite section de décision (35) combine les informations fournies par l'estimateur de panneaux de signalisation (36) avec des informations fournies par le détecteur de panneaux de signalisation (31) et le classificateur de panneaux de signalisation (33) et, lorsque la section de décision détermine une différence entre le panneau détecté et l'estimation par l'estimateur de panneaux de signalisation, la section de décision détermine laquelle des interprétations de panneaux offertes par le détecteur de panneaux de signalisation et l'estimateur de panneaux de signalisation est appropriée et délivre un signal de commande pour réaliser une action conforme au panneau de signalisation jugé approprié.

2. Système de vision selon la revendication 1, dans lequel sur la base de ladite comparaison ou combinaison, la section de décision (35) lance une action appropriée comprenant une ou plusieurs
- d'une délivrance d'un signal de commande (38) à un dispositif de signalisation (18) pour suggérer une action alternative au conducteur ;
- d'une délivrance d'un signal de commande (38) à un dispositif de signalisation (18) pour signaler au conducteur de prendre la commande du véhicule.

3. Système de vision selon la revendication 2, dans lequel selon une pluralité de panneaux de vitesse probables estimés par l'estimateur de panneaux de signalisation (36), le panneau de vitesse de la vitesse la plus faible est considéré approprié.

4. Système de vision selon la revendication 2 ou 3, dans lequel la section de décision (35) envoie un signal de commande (38) pour commander au véhicule à moteur de réaliser une action appropriée conformément audit panneau de signalisation considéré approprié.

5. Système de vision selon l'une quelconque des revendications précédentes, dans lequel ladite unité de traitement des données (14) comprend un estimateur de marquage routier conçu pour estimer des informations de validité d'un ou plusieurs marquages routiers, et comparer les informations de validité de marquage routier à des détections de marquage routier correspondantes détectées et classifiées par un détecteur/classificateur de balisage routier.

6. Système de vision selon l'une quelconque des revendications précédentes, dans lequel la section de décision (35) envoie un signal de commande pour désactiver un système de conduite autonome et rendre la commande au conducteur s'il constate une incohérence entre un panneau de signalisation classifié détecté et l'estimation par l'estimateur de panneaux de signalisation (36).

7. Système de vision selon la revendication 1, dans lequel l'entraînement de l'estimateur de panneaux de signalisation (36) est réalisé sur des images provenant d'un point où un panneau de signalisation d'un type spécifique a été dépassé par le véhicule ego et n'est plus visible par le système d'imagerie, jusqu'à ce que le prochain panneau de vitesse du même type spécifique entre dans le champ de vision du système d'imagerie.

8. Système de vision selon la revendication 1, dans lequel l'estimateur de panneau de signalisation (36) est entraîné sur des images où des informations sur les panneaux de signalisation visibles par l'appareil d'imagerie (11) sont masquées, floues ou remplacées par des panneaux aléatoires.
